# EUROPÄISCHE PATENTANMELDUNG

(11) **EP 2 428 622 A1**
(43) Veröffentlichungstag der Anmeldung: **14.03.2012**
(21) Anmeldenummer: 10009509.0
(22) Anmeldetag: 13.09.2010
(51) Int. Cl.: E03F 5/16, B01D 17/02

(54) **Schwerkraft-Abscheider**

(71) Anmelder: Kessel AG, 85101 Lenting (DE)
(72) Erfinder: Kessel, Bernhard, 85101 Lenting (DE)
(74) Vertreter: Grünecker, Kinkeldey, Stockmair & Schwanhäusser

(57) **Zusammenfassung**

Bei einem Schwerkraft-Abscheider (A) mit einem einen Zulauf (4) und einen Ablauf (5) aufweisenden Behälter (1) weisen Zu- und Ablauf (4, 5) im Behälter über einen Strömungsweg kommunizierende Mündungen (7, 8) auf und ist der Strömungsweg durch wenigstens einen wenigstens eine Platte (23, 32') und/oder eine Gewebebahn (32) aufweisenden, im Behälter hängend verbauten Vorhang (V) umgelenkt und über die lichte Weite (F') des Behälters (1) hinaus verlängert.

## Beschreibung

Die Erfindung betrifft einen Schwerkraft-Abscheider gemäß Oberbegriff des Patentanspruchs 1.

In Schwerkraft-Abscheidern, wie beispielsweise Leichtflüssigkeitsabscheidern, ist es bekannt, z.B. Koaleszenzmaterial oder einen Koaleszenzfiltereinsatz zu installieren, und gegebenenfalls im Inneren des Behälters starre Einbauten vorzusehen, wobei Zu- und Auslauf im Regelfall einander gegenüberliegen, so dass die Flüssigkeit im Abscheidebetrieb im Wesentlichen geradlinig oder nur geringfügig umgelenkt durch den meist Behälter strömt. Der Gesamtströmungsweg ist relativ kurz, etwa entsprechend der lichten Weite des Behälters. Gegebenenfalls vorgesehene Einbauten führen zu teilweise ungünstigen Strömungsverhältnissen und Totzonen. Der Aufwand und Montageinsatz für das Koaleszenzmaterial ist hoch. Die Bauweise erschwert die Entsorgung. Unter anderem sind deshalb am Behälter oben mindestens zwei Dome üblich, was zusätzlichen Herstellungsaufwand bedingt.

In als Fettabscheider betriebenen Schwerkraft-Abscheidern mit Zu- und Auslauf gegenüberliegend sind zwar starre Einbauten im Inneren des Behälters bekannt, um einen bestimmten Strömungsverlauf zu erzwingen, z.B. entlang der Behälterinnenwand. Jedoch führen solche Einbauten zu zumindest bereichsweise ungünstigen Strömungsverhältnissen und unerwünschten Totzonen, und ist die Abscheideleistung aufgrund des relativ kurzen Gesamtströmungsweges gemindert. Ferner behindern starre Einbauten eine zügige und weitgehende Entsorgung.

Der Erfindung liegt die Aufgabe zugrunde, einen Schwerkraft-Abscheider der eingangs genannten Art zu schaffen, dessen Abscheideleistung auf baulich einfache und praxisorientierte Weise gesteigert ist. Hintergrund hierzu ist es, die Herstellung und Installation des Schwerkraft-Abscheiders kostengünstig und einfach gestalten zu lassen, im Abscheidebetrieb einen möglichst langen Gesamtströmungsweg mit günstigen Strömungsverhältnissen zu schaffen, und eine problemlose Entsorgung zu ermöglichen.

Die gestellte Aufgabe wird mit den Merkmalen des Patentanspruchs 1 gelöst.

Durch den zumindest einen Vorhang im Inneren des Behälters werden Teilströmungswege definiert, die insgesamt in einem Gesamtströmungsweg vom Zu- zum Auslauf resultieren, der wesentlich länger ist als die lichte Weite des Behälters und der Totzonen minimiert. Der Schwerkraft-Abscheider ist bei erheblich gesteigerter Abscheideleistung dennoch kostengünstig. Bei einem beispielsweise als Leichtflüssigkeitsabscheider ausgebildeten Schwerkraft-Abscheider kann dank des mindestens eines Vorhangs und gegebenenfalls strategisch günstiger Platzierung der Mündungen von Zu- und Auslauf die Abscheideleistung so gesteigert werden, dass gegebenenfalls ein wie bisher üblicherweise beim Auslauf vorzusehender Koaleszenzfiltereinsatz oder Koaleszenzmaterial weggelassen werden kann, was Kosten spart und die Entsorgung vereinfacht. Weiterhin erleichtert der gegebenenfalls strömungsabhängig nachgebende Vorhang die Entsorgung, z.B. bei einem Leichtflüssigkeitsabscheider das Abpumpen abgeschiedener Substanzen, wie Öl, Benzin oder Schlamm. Der Vorhang lässt sich kostengünstig herstellen und bequem herstellerseitig oder bei der Montage vor Ort einbauen, gegebenenfalls sogar zur Nachrüstung. Da zumindest dank des Vorhangs die Abscheideleistung gesteigert ist, lässt sich für eine geforderte Abscheideleistung der Behälter kleiner dimensionieren, was Einbauraum und Herstellungs- und Materialkosten einspart.

Bei einer zweckmäßigen Ausführungsform ist der Vorhang und/oder ein weiterer, den Gesamtströmungsweg noch verlängernder Vorhang mit wenigstens einem Seitenrand direkt an einer Behälterseitenwand angeordnet. In diesem Bereich verhindert der Vorhang eine Kurzschlussströmung, die die Abscheideleistung beeinträchtigen könnte.

Ferner ist es zweckmäßig, wenn unabhängig von am Behälter einander gegenüberliegenden oder eng benachbarten Platzierungen von Zu- und Auslauf im Behälter liegende Mündungen vom Zu- und Auslauf wesentlich enger benachbart sind als es der lichten Weite des Behälters entspricht. Ausgehend von den eng benachbarten Mündungen lässt sich mittels des Vorhangs ein optimal langer Gesamtströmungsweg für eine hohe Abscheideleistung realisieren.

Gemäß eines besonders wichtigen Aspekts der Erfindung sind die Mündungen von Zu- und Auslauf in einem im Inneren des Behälters angeordneten, gemeinsamen Bauwerk angeordnet und darin durch wenigstens eine Trennwand voneinander separiert. Das Bauwerk ist zweckmäßig schachtförmig und erstreckt sich gegebenenfalls bis zum Behälterboden. Alternativ kann das Bauwerk auch topfförmig ausgebildet sein. Das Bauwerk weist jeder Mündung zugeordnet wenigstens einen seitlichen Durchgang auf, der den Anfang bzw. das Ende des Gesamtströmungsweges definiert. Der am Behälter außen angeordnete Zulauf wie auch der Auslauf können so platziert sein, wie es den weiterführenden Strömungswegen am besten gerecht wird, d.h. gegenüberliegend, beieinanderliegend, an einer Längsseitenwand oder einer Querseitenwand, oder dgl., und sind dann durch entsprechende Verrohrungen im Inneren des Behälters mit den Mündungen bzw. dem Bauwerk verbunden. Das Bauwerk ist gegebenenfalls eine komplett vorfertigbare Einheit, beispielsweise aus Kunststoff, und kann einstückig bereits mit der Trennwand ausgebildet sein. Das Bauwerk lässt sich gegebenenfalls sogar zur Nachrüstung durch einen Behälterdom einsetzen, wie auch der optimal mit dem Bauwerk zusammenwirkende Vorhang, der den Gesamtströmungsweg ausgehend vom und zurückkehrend zum Bauwerk entsprechend verlängert. Das den Mündungen gemeinsame Bauwerk resultiert ferner in dem wichtigen Vorteil, im Behälter, beispielsweise eines Leichtflüssigkeitsabscheiders, nur mehr einen einzigen Dom zu benötigen, der, zweckmäßig, in etwa oberhalb des Bauwerks angeordnet ist. Dies spart Herstellungskosten und reduziert das Gewicht des Behälters.

In einer zweckmäßigen Ausführungsform werden entlang des Vorhangs oder entlang jedes Vorhangs Teilströmungswege definiert, und verläuft die Verlaufsrichtung des jeweiligen Vorhangs im Wesentlichen parallel zur Strömungsrichtung im jeweiligen Teilströmungsweg. Es kann jedoch auch zweckmäßig sein, z.B. im Hinblick auf eine aktive Strömungsdynamik, die Verlaufsrichtung des Vorhangs schräg gegenüber den Strömungsrichtungen in den Teilströmungswegen anzuordnen. Jeder oder der Vorhang kann mit einer im Wesentlichen geraden Verlaufsrichtung installiert sein, oder Kurven bilden bzw. in sich verschlungen sein, z.B. im Hinblick auf einen optimal langen Gesamtströmungsweg oder/und den Verlauf der Behälterseitenwand oder/und eventuellen Einbauten oder das Bauwerk.

Bei einer zweckmäßigen Ausführungsform sind die Mündungen ohne Bauwerk im Inneren des Behälters freiliegend platziert. Die Mündungen werden direkt durch den Vorhang oder einen der Vorhänge voneinander isoliert, der sich dazwischen bis zu einer der jeweiligen Mündung benachbarten Behälterseitenwand erstreckt. Zweckmäßig sind die beiden Mündungen direkt nebeneinander und höhenversetzt angeordnet, oder im Behälter einander gegenüberliegend.

Ist das den Mündungen gemeinsame Bauwerk vorgesehen, dann sollte sich der jeweilige Vorhang, der die Teilströmungen von dem Bauwerk weg und zum Bauwerk hin führt, an das Bauwerk anschließen, um dort einen Kurzschlussströmungsweg zu vermeiden.

Allein durch die den Gesamtströmungsweg erheblich verlängernde Wirkung des Vorhangs wird die Abscheideleistung so gesteigert, dass in einem Leichtflüssigkeitsabscheider gegebenenfalls Koaleszenzmaterial weggelassen werden kann. Besonders zweckmäßig weist sogar der Vorhang zumindest bereichsweise eine koaliszierende Oberfläche auf, so dass separat eingebrachtes Koaleszenzmaterial oder ein Koaleszenzfiltereinsatz weggelassen werden kann, was nicht nur Kosten spart und Strömungshindernisse vermeidet, sondern auch die Entsorgung begünstigt. Der Vorhang kann hierbei zumindest bereichsweise die Funktion miterfüllen, die zum effektiven Koalieren von Leichtstofftröpfchen oder -teilchen zur besseren Abscheidung erforderlich ist.

Für den Vorhang sind unterschiedliche Ausführungsformen zweckmäßig.

In einer Ausführungsform sind im Vorhang einzelne, in Verlaufsrichtung des Vorhangs aufeinanderfolgende Platten vorgesehen. Diese Platten können im Wesentlichen zueinander parallel sein und sich überlappen oder aneinander anschließen. Besonders zweckmäßig sind die Platten in der jeweiligen Strömungsrichtung in einem Teilströmungsweg zum Teilströmungsweg hin schräg angestellt, so dass sie eine Art Lamellenvorhang bilden, wobei die Zwischenräume zwischen den Platten keinen nennenswerten Störeinfluss haben, weil die Teilströmungen dank der Schrägstellung über die Zwischenräume hinweggeführt werden. Hingegen haben die Zwischenräume beim Entsorgen den Vorteil, die Entsorgung erheblich zu erleichtern. Die Schrägstellung der Platten kann bei einem Winkel von etwa 45° gegenüber der Verlaufsrichtung des Vorhangs liegen. Andere Schrägstellungswinkel sind auch möglich. Die Platten können gleich breit oder verschieden breit sein. Das Maß der gegenseitigen Überlappung kann bis zur Hälfte der Plattenbreite oder mehr betragen.

Besonders zweckmäßig sind die schräg angestellten Platten um im Wesentlichen vertikale Achsen drehbar an der Abhängung des Vorhangs abgehängt. Diese Drehbarkeit ermöglicht es, dass bei der Entsorgung, z.B. beim Abpumpen, aufgrund der dann auftretenden Strömungskräfte sich die Platten verdrehen und große Querschnitte freigeben, während sie dann im späteren Abscheidebetrieb durch die zulaufende Strömung wieder in die Schräglage gebracht werden. Zur Definition gleicher Schräglagen können gegebenenfalls entsprechende Anschläge vorgesehen sein.

In einer Ausführungsform ist im Vorhang wenigstens eine Gewebebahn vorgesehen, die als koaliszierende Oberfläche durchlässig ist und Maschen aufweist, die die Kollision von Partikeln oder Tröpfchen begünstigen.

Bei einer anderen Ausführungsform kann die Gewebebahn oder Platte undurchlässig sein und als koaliszierende Oberfläche eine Reliefstruktur aufweisen, die die Oberfläche erheblich vergrößert und die Kollision von Partikeln begünstigt, die dann leichter koalieren.

Bei einer weiteren, zweckmäßigen Ausführungsform ist zur Verbesserung der Strömungsverhältnisse der im Strömungsumlenkbereich zur Behälterseitenwand mit einem Zwischenabstand weisende Seitenrand des Vorhangs mit einer Verdickung versehen, die eine vorübergehende Beschleunigung der Strömung generiert, und so Totzonen minimiert. Die Verdickung kann runden oder tropfenförmigen Querschnitt besitzen, oder im Querschnitt variabel sein, und kann aus dem Material des Vorhangs bestehen, oder aus einem anderen Material am Seitenrand geformt sein.

Bei einer zweckmäßigen Ausführungsform hat der Vorhang trotz im Wesentlichen gerader Verlaufsrichtung zumindest bereichsweise einen gewellten oder zick-zack-förmigen Verlauf mit einem Wellen- oder Zick-Zack-Profil, um den Gesamtströmungsweg noch mehr zu verlängern und permanente Umlenkungen zu erzeugen, die die Kollision von Partikeln unterstützen und zum effizienten Koalieren beitragen.

Bei einer anderen Ausführungsform sind im Vorhang Platten und Gewebebahnen kombiniert, wobei beispielsweise Gewebebahnen oder Platten mit einer koaliszierenden Oberflächen dort platziert werden, wo das Koalieren von Bestandteilen intensiviert werden soll. Beispielsweise sind im Bereich der Mündungen Platten ohne koaliszierende Oberflächen vorgesehen, während Gewebebahnen oder Platten mit koaliszierenden Oberflächen im weiteren Verlauf des Gesamtströmungsweges platziert werden.

Der im Inneren des Behälters abgehängte Vorhang kann an einer leicht installierbaren Abhängung verankert sein, zweckmäßig oberhalb des Freispiegels im Behälter. Als Abhängung kann ein längsgeschlitztes Rohr verwendet werden, oder mindestens ein Schienensystem mit einer oder zwei parallelen Führungen, wie dies bei normalen Vorhängen üblich ist. Dies ist eine baulich einfache, leicht zu montierende Lösung.

Im Falle eines Rohres, in das der Vorhangoberrand eingefädelt ist, kann der Vorhangoberrand mit einem Kleber oder einem Harz zur Sicherung festgelegt werden. Alternativ könnte in dem Vorhangoberrand eine Verdickung oder ein Keder vorgesehen sein, und der so verdickte Vorhangoberrand nur in das Rohr eingefädelt werden.

Zweckmäßig kann es ferner sein, Hängeverankerungen des Vorhangs als Haken mit einem Drehgelenk auszubilden, damit eine gewisse Beweglichkeit des Vorhangs oder speziell der Platten gewährleistet wird. Solche Haken könnten aus einer Öse und einem Schäkel bestehen, die über das Drehgelenk verbunden sind, wobei die Öse beispielsweise über eine Schiene gefädelt wird, und der Schäkel in eine Öse des Vorhangs eingesetzt wird.

Bei einer zweckmäßigen Ausführungsform halbiert ein allgemein mit gerader Verlaufsrichtun angeordneter Vorhang das Innere des Behälters in etwa gleich große Volumina. Alternativ könnten auch mindestens zwei im Wesentlichen zueinander parallele Vorhänge vorgesehen sein, die einen mäanderförmigen Gesamtströmungsweg definieren, der beispielsweise bis zum Dreifachen der lichten Weite des Behälters betragen kann, z.B. falls die Mündungen im Behälter einander gegenüberliegen.

Bei einer weiteren Ausführungsform sind zwei oder mehrere Vorhänge jeweils mit annähernd geradem Verlauf zueinander abgewinkelt oder in einer sternförmigen Konfiguration angeordnet. Zweckmäßig werden mehrere Vorhänge sternförmig um das den Mündungen gemeinsame Bauwerk angeordnet, und auch an dieses angeschlossen.

Zweckmäßig weist der Behälter nur einen einzigen Dom auf, der, vorzugsweise, in etwa oberhalb des Bauwerks platziert ist, falls ein solches vorgesehen ist. Beispielsweise können die Abhängung und die Bestandteile des Vorhangs, wie gegebenenfalls auch das Bauwerk, durch den Dom eingebracht und/oder entnommen werden.

Der Vorhang oder die Bestandteile des Vorhangs sollten aus zunächst gegen Fette oder Leichtflüssigkeiten und dgl. resistentem Material bestehen. Gegebenenfalls ist eine oberflächliche Ausrüstung oder Imprägnierung vorgesehen. Besonders geeignet sind verschiedene Kunststoffmaterialien, ohne dass die Erfindung darauf eingeschränkt sein soll, wobei Kunststoff in flexibler, halbstarrer oder starrer Einstellung verarbeitet sein kann.

Anhand der Zeichnungen werden Ausführungsformen des Anmeldungsgegenstandes erläutert. Es zeigen:
- Fig. 1 bis 3: einander zugeordnete, schematische Schnittansichten eines Schwerkraft-Abscheiders, beispielsweise eines Leichtflüssigkeitsabscheiders,
- Fig. 4 und 5: zwei verschiedene Detailvarianten, analog zu Fig. 3,
- Fig. 6 und 7: zwei weitere Detailvarianten, ähnlich denen von Fig. 3 und 4,
- Fig. 8 bis 11: vier unterschiedliche Konzepte zur Ausbildung und Anordnung eines Vorhangs,
- Fig. 12 und 13: zwei Detailvarianten zur Verankerung des Vorhangs, beispielsweise der Fig. 8 bis 11 an einer Abhängung,
- Fig. 14 bis 16: einander zugeordnete, schematische Schnittansichten einer weiteren Ausführungsform, wobei Fig. 15 und 16 unterschiedliche Detailvarianten andeuten,
- Fig. 17 und 18: zwei einander zugeordnete schematische Schnittansichten einer weiteren Ausführungsform eines Schwerkraft-Abscheiders,
- Fig. 19 bis 21: erklärende Detailschnittansichten zu den Ausführungsformen des Schwerkraft-Abscheiders gemäß Fig. 14 bis 18, und
- Fig. 22 und 23: zwei einander zugeordnete Detailschnittansichten einer weiteren Ausführungsform eines Schwerkraft-Abscheiders.

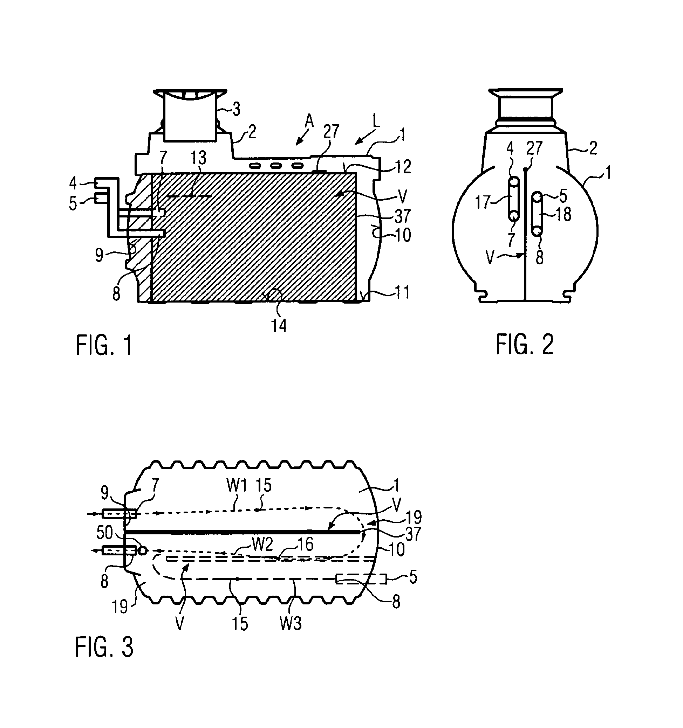

Ein Schwerkraft-Abscheider A gemäß den Fig. 1 bis 3 weist einen beispielsweise aus Kunststoff bestehenden Behälter 1 mit einem einzigen obenliegenden Dom 2 und gegebenenfalls darin eingestecktem Aufsatzstück 3 auf, sowie an einer Behälterseitenwand 9 einen obenliegenden Zulauf 4 und einen darunterliegenden Auslauf 5, wobei der Auslauf 5 mit seiner Unterkante einen Freispiegel 13 im Behälter 1 definiert. Vom Zulauf 4 bzw. Auslauf 5 führt jeweils eine Verrohrung 17, 18 ins Innere des Behälters zu Mündungen 7, 8, die in den Fig. 1 bis 3 eng benachbart und im Abstand von der Behälterseitenwand 9 übereinander und seitlich gegeneinander versetzt platziert sind. Der innere Abstand zwischen der Behälterseitenwand 9 und der gegenüberliegenden Behälterseitenwand 10 des in dieser Ausführungsform annähernd zylindrischen und länglichen Behälters 1 definiert eine lichte Weite F' (Fig. 3) des Behälters 1. In etwa in der Längsmittelachse des Behälters 1 ist an einer Abhängung 27 oberhalb des Freispiegels 13 ein Vorhang V montiert, der sich ausgehend von der linken Behälterseitenwand 9 bis zu einem Seitenrand 37 erstreckt, der im Abstand von der anderen Behälterwand 10 beispielsweise vertikal verläuft und dort einen Strömungsumlenkbereich 19 definiert. Ein oberer Rand 12 des Vorhangs V liegt oberhalb des Freispiegels 13. Ein unterer Rand 14 des Vorhangs V kann in der Nähe eines Behälterbodens 11 oder im Abstand darüber liegen. Der Schwerkraft-Abscheider A in den Fig. 1 bis 3 ist beispielsweise ein Leichtflüssigkeitsabscheider L. Der Vorhang V separiert die Mündungen 7, 8 voneinander und definiert einen Gesamtströmungsweg zwischen den Mündungen 7, 8, der erheblich länger ist als die lichte Weite F', und der im gezeigten Ausführungsbeispiel aus zwei Teilströmungswegen W1, W2 (gepunktet dargestellt) jeweils mit Strömungsrichtungen 15, 16 annähernd parallel zur Verlaufsrichtung des Vorhangs V gebildet ist. Der Vorhang V halbiert etwa das Volumen im Behälter 1.

Gestrichelt ist in Fig. 3 ein weiterer Vorhang V parallel zu dem gezeigten Vorhang V angedeutet, der sich an die rechte Behälterwand 10 anschließt und links im Abstand von der Behälterwand 9 endet und dort einen weiteren Strömungsumlenkbereich 19 definiert, so dass insgesamt (gestrichelt mit einem weiteren Teilströmungsweg W3 mit der Strömungsrichtung 15) ein mäanderförmiger Gesamtströmungsweg definiert wird, der sich ausgehend von der Mündung 7 zu der dann beispielsweise in der gegenüberliegenden Behälterseitenwand 10 platzierten Mündung 8 des Auslaufs 5 erstreckt. Jeder Vorhang hängt in etwa vertikal und ist gegebenenfalls strömungsbedingt eigenbeweglich. Eine Verankerung des Vorhangs V auch im Bereich des Behälterbodens 11 ist nicht gezeigt, wäre aber gegebenenfalls möglich.

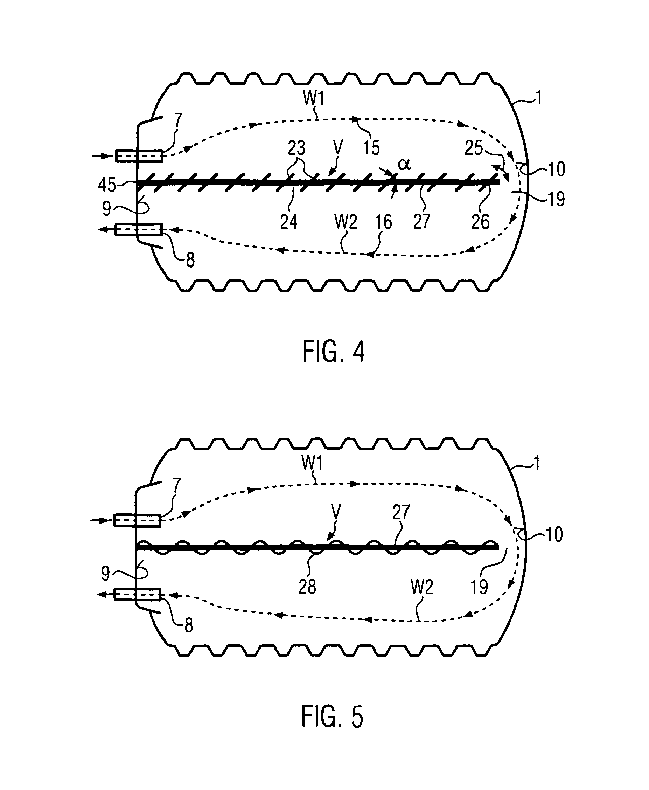

Fig. 4 verdeutlicht in einer schematischen Schnittansicht ähnlich der von Fig. 3 eine Detailvariante des Vorhangs V, der an der Abhängung 27 hängt, mit seinem Seitenrand 45 an die Behälterseitenwand 9 anschließt, und aus einzelnen Platten 23, beispielsweise aus Kunststoff, besteht. Die Platten können gleiche oder verschiedene Breite haben, können sich überlappen oder nicht überlappen und definieren zwischen sich Durchlässe 24. Die Platten 23 sind im Wesentlichen zueinander parallel und mit einem Winkel α so schräg angestellt, dass jede Platte in Strömungsrichtung 15 bzw. 16 zum jeweiligen Teilströmungsweg W1, W2 hin geneigt ist. Der Schrägstellungswinkel α ist variabel und kann beispielsweise etwa 45° betragen. Zweckmäßig sind die Platten 23 mit Verankerungen 26 an der Abhängung 27 so festgelegt, dass sie sich in Richtung des Doppelpfeiles 25 verdrehen können.

In der Ausführungsvariante des Vorhangs V in Fig. 5 (analog zu Fig. 3) hat der Vorhang V einen geradlinigen Verlauf und eine beispielsweise geradlinige Abhängung 27 oberhalb des Freispiegels 13, jedoch eine Wellenstruktur 28 mit gerundeten Kuppen und Wellenschenkeln unter z.B. jeweils 45° gegenüber der Abhängung 27.

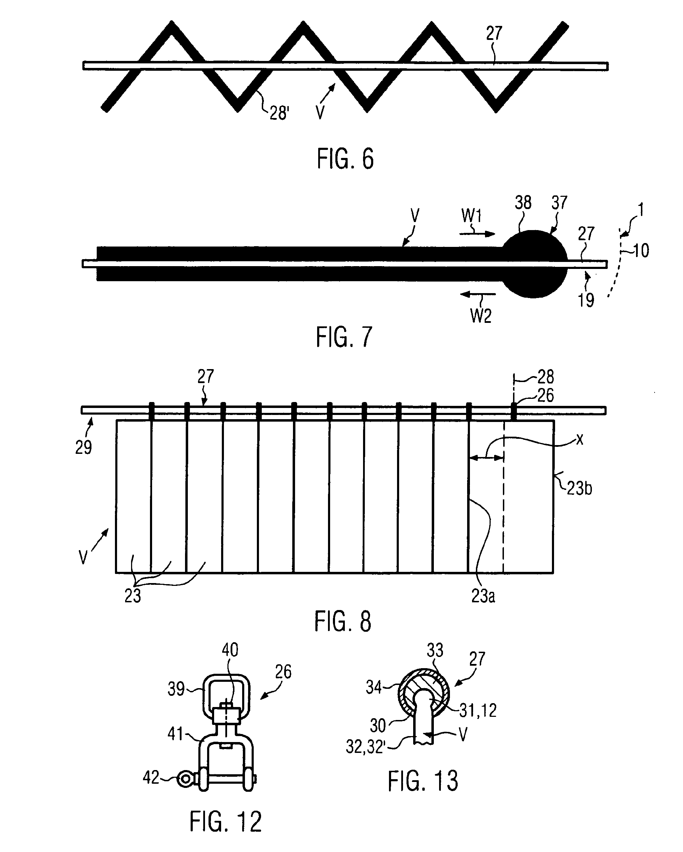

In den Fig. 4 und 5 sind die Mündungen 7, 8 freiliegend im Inneren des Behälters und eng beieinander platziert. Die Vorhangkonzepte von Fig. 4 und 5, wie auch das in Fig. 6 und 7 gezeigte Vorhangkonzept, können auch wie in Fig. 3 zur Schaffung eines mäanderförmigen Gesamtströmungsweges eingesetzt werden, d.h., Vorhänge V zu zweit oder sogar zu mehreren.

Fig. 6 zeigt als Schemadraufsicht einen Vorhang V mit einer Zick-Zack-Struktur 28', wobei jeder Zick-Zack-Schenkel unter etwa 45° gegenüber der Abhängung 27 angestellt ist. Die Zick-Zack-Struktur 28' kann wie auch die Wellenstruktur 28 in Fig. 4 regelmäßig oder bereichsweise unregelmäßig oder allmählich zunehmend oder allmählich abgeschwächt ausgebildet sein, und kann zur zusätzlichen Verlängerung des Gesamtströmungsweges und/oder Strömungsintensivierung beitragen.

Fig. 7 zeigt für einen, wie in Fig. 3 dargestellten, geraden Vorhang V im Bereich des von der Behälterwand 10 beabstandeten Seitenrandes 37 eine Umlenkungsverdickung 38, die beispielsweise runden oder tropfenförmigen Querschnitt oder variablen Querschnitt aufweisen kann und im Umlenkbereich 19 zwischen den Teilströmungen W1, W2 eine vorübergehende Strömungsbeschleunigung und saubere Strömungsführung erzeugen kann. Die Verdickung 38 kann aus dem Material des Vorhangs V gebildet sein, oder aus einem Fremdmaterial, das am Seitenrand 37 angebracht ist.

Fig. 8 verdeutlicht eine Ausführungsform eines Vorhangs V, der aus mehreren Platten 23, analog zu Fig. 4, besteht, die hier mit gegenseitigen Überlappungen x über die Verankerungen 26 und um Drehachsen 28 verdrehbar an der Abhängung 27 montiert sind, beispielsweise an einem Schienensystem 29 mit einer oder zwei parallelen Führungen. Die Seitenränder jeder Platte 23 sind mit 23a und 23b angedeutet. Bei den Platten 23 kann es sich beispielsweise um glatte oder strukturierte Kunststoffplatten oder Platten aus einem zumindest gegen Fette und Leichtflüssigkeiten resistenten Material handeln. Die Platten können flexibel oder halbstarr oder starr ausgelegt sein.

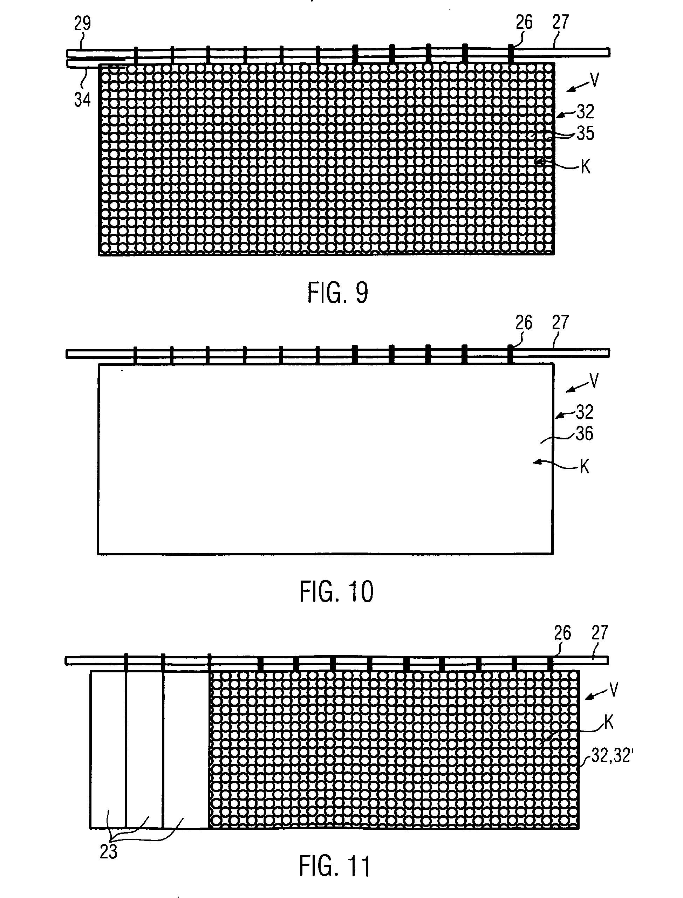

Der in Fig. 9 gezeigte Vorhang V ist beispielsweise zumindest eine Gewebebahn 32, die zumindest bereichsweise eine koaliszierende Oberfläche K aufweist, beispielsweise in Form von durchlässigen Maschen 35. Der obere Rand des Vorhangs V kann mit den Verankerungen 26 an der Abhängung 27 installiert werden, beispielsweise an dem Schienensystem 29, oder, wie links angedeutet, in ein längsgeschlitztes Rohr 34 eingefädelt und darin festgelegt sein.

Der Vorhang V in Fig. 10 ist eine Gewebebahn oder eine Platte 32', die nicht durchlässig ist, dafür aber als koaliszierende Oberfläche K eine Reliefstruktur 36 aufweist (einseitig oder beidseitig), die die Oberfläche vergrößert. Die Gewebebahn oder Platte 32' (gegebenenfalls aus mehreren Abschnitten zusammengesetzt, die hintereinander hängen oder sogar miteinander verbunden sind) kann mit den Verankerungen 26 an der Abhängung 27 installiert sein, oder alternativ auch in dem in Fig. 9 angedeuteten, längsgeschlitzten Rohr 34 mit ihrem Oberrand fixiert sein.

Fig. 11 verdeutlicht einen Vorhang V, der eine Kombination aus den Platten 23 und der Gewebebahn 32 oder der Platte 32' ist. Zumindest an der Gewebebahn 32 bzw. der Platte 32' können koaliszierende Oberflächen K vorgesehen sein, entweder mit den Maschen 35 von Fig. 9 und/oder der Reliefstruktur 36 von Fig. 10.

Fig. 12 verdeutlicht eine mögliche Ausführungsform einer Verankerung 26, die hier als Haken mit einem Drehgelenk 40 ausgebildet ist, und beispielsweise zur Abhängung der Platten 23 von Fig. 11 oder Fig. 8 zweckmäßig ist. Die Verankerung 26 in Fig. 12 besitzt beispielsweise eine Öse 39, die auf das Schienensystem 29 aufgefädelt werden kann, und einen Schäkel 41, der mit der Öse 39 über das Drehgelenk 40 drehbar verbunden ist und einen Schäkelbolzen 42 enthält, der durch eine Öse im Vorhang V eingebracht wird.

In Fig. 13 ist, wie in Fig. 9 links oben gezeigt, das längsgeschlitzte Rohr 34 mit einem beispielsweise nach unten weisenden Längsschlitz 30 gezeigt, in das eine Verdickung 31 bzw. der obere Rand 12 des Vorhangs V bzw. der Gewebebahn 32 oder der Platte 32' eingefädelt und festgelegt ist. Gegebenenfalls wird mit einem Kleber oder einem Harz 33 der obere Rand 12 bzw. die Verdickung 31 fixiert. In der Verdickung 31 könnte beispielsweise ein Keder (nicht gezeigt) enthalten sein. Das Rohr 34 bildet in Fig. 13 die Abhängung 27 für den Vorhang V, oder ist an der Abhängung 27 angebracht.

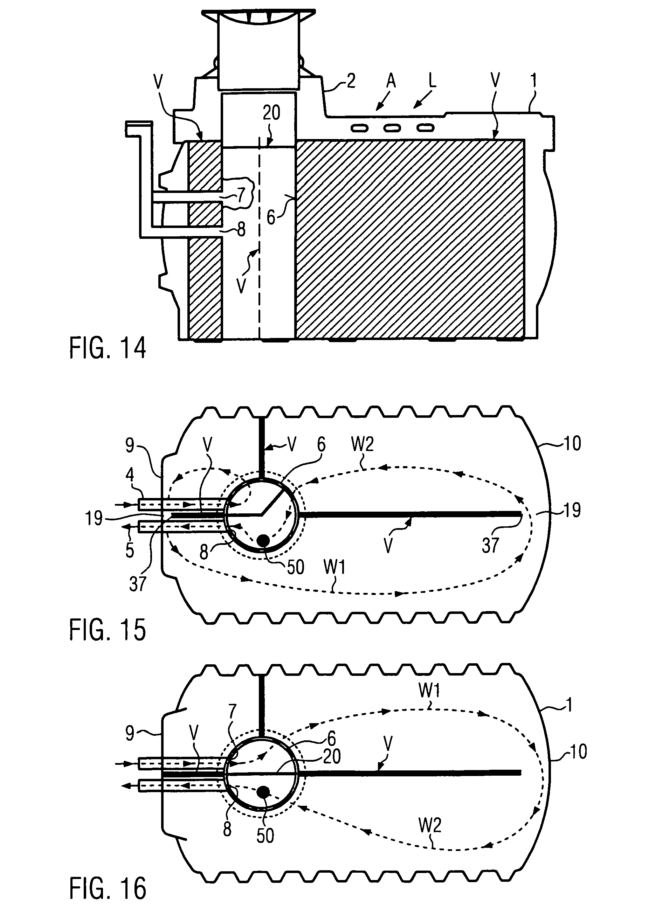

Fig. 14 und 15 zeigen eine andere Ausführungsform eines Schwerkraft-Abscheiders A, beispielsweise eines Leichtflüssigkeitsabscheiders L, bei welchem im Inneres des hier langgestreckten Behälters 1 drei Vorhänge V angeordnet sind, und zwar um ein den Mündungen 7, 8 gemeinsames Bauwerk 6, das beispielsweise ein vom Behälterboden hochstrebender Schacht hier mit kreisrundem Querschnitt und hohl ist. Im Bauwerk 6 ist eine Trennwand 20 vorgesehen, die die Mündungen 7, 8 voneinander trennt. Ferner sind hier Zu- und Auslauf 5 gemeinsam an einer Behälterseitenwand platziert. Zwei in etwa in der Längsmittelachse des Behälters 1 verlaufende Vorhänge V halbieren in etwa das Innere des Behälters, sind an das Bauwerk 6 angeschlossen, und erstrecken sich so weit, dass ihre Seitenränder 37 im Abstand von der jeweiligen Behälterseitenwand 9, 10 liegen. Es wird ein Gesamtströmungsweg gebildet, der sich aus den Teilströmungswegen W1 und W2 zusammensetzt, wobei der dritte Vorhang V in etwa senkrecht zu den anderen Vorhängen V orientiert ist, und sich vom Bauwerk 6 bis zur gegenüberliegenden Behälterwand erstreckt, um Kurzschlussströmungswege zu blockieren. Der Teilströmungsweg W1 führt schräg aus dem Bauwerk 6 zwischen den beiden linksseitigen Vorhängen V heraus, verläuft durch den linksseitigen Umlenkbereich 19 und dann entlang der zwei aufeinander ausgerichteten Vorhänge V in Richtung zur Behälterseitenwand 10 zum dort liegenden Umlenkbereich 19. Der Teilströmungsweg W2 verläuft von dem rechtsseitigen Umlenkbereich 19 in das Bauwerk 6.

Fig. 16 verdeutlich eine Detailvariante mit zwei in etwa in der Längsmitte des Behälters 1 angeordneten Vorhängen V, die an das Bauwerk 6 anschließen, in welchem die Mündungen 7, 8 durch die hier in Ausrichtung auf die beiden Vorhänge V orientierte Trennwand 20 voneinander isoliert sind. Der linksseitige kürzere Vorhang V erstreckt sich vom Bauwerk 6 bis zur Behälterseitenwand 9, während der rechtsseitige Vorhang V vom Bauwerk 6 in Richtung zur anderen Behälterseitenwand 10 verläuft und im Abstand vor dieser endet. Da Wartungsarbeiten allenfalls im Bereich des Bauwerks 6 erforderlich sind, reicht es aus, den Behälter 1, wie gezeigt, mit nur einem einzigen Dom 2 zu versehen, der, zweckmäßig, oberhalb des Bauwerks 6 angeordnet ist.

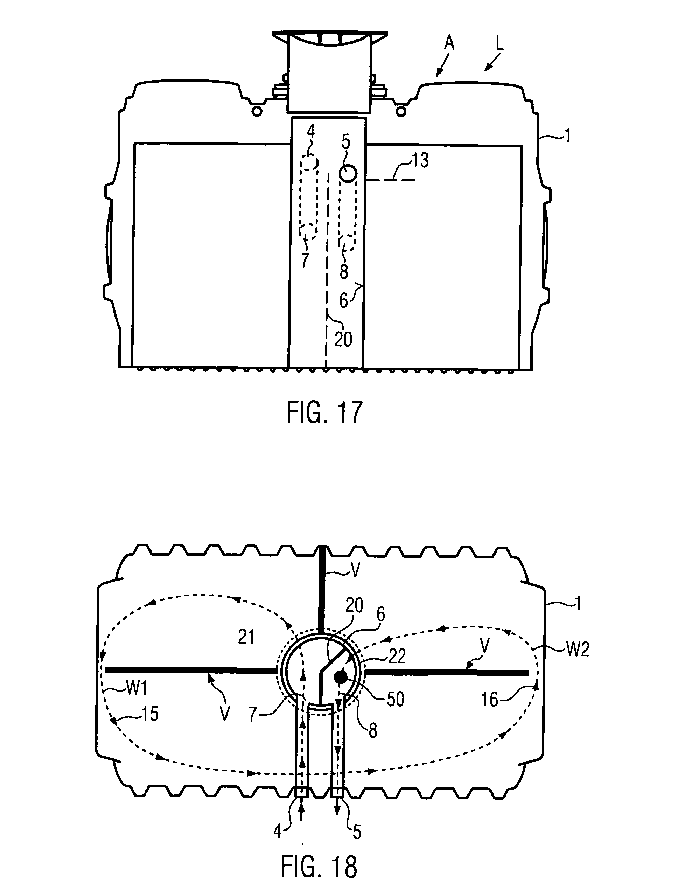

Die Ausführungsform des Schwerkraft-Abscheiders A in den Fig. 17 und 18, z.B. ebenfalls ein Leichtflüssigkeitsabscheider L, ist ähnlich der Ausführungsform der Fig. 14 und 15. Unterschiedlich ist eine weitgehend zentrale Position des Bauwerks 6, und die Anordnung von Zu- und Ablauf 4, 5 an einer Behälterlängswand und eng beeinander. Es sind wiederum insgesamt drei Vorhänge V in einer Sternanordnung jeweils anschließend an das Bauwerk 6 vorgesehen, wobei die beiden miteinander fluchtenden Vorhänge jeweils im Abstand von den Behälterseitenwänden enden, während der dritte, dazu senkrecht orientierte Vorhang V vom Bauwerk 6 bis an die Behälterlängswand verläuft. Die Trennwand 20 im Bauwerk 6 ist wie in Fig. 15 abgewinkelt, wobei die Mündung 8 zum Auslauf 5 den kleineren Teil des Querschnitts des Bauwerks 6 nutzt. Im Bauwerk 6 sind den Mündungen 7, 8 zugeordnete Durchlässe 21, 22 in vorbestimmten Orientierungen um die Bauwerksachse angeordnet, die sozusagen den Anfang und das Ende des Gesamtströmungsweges definieren, und über welche das Bauwerk 6 mit dem Inneren des Behälters 1 kommuniziert.

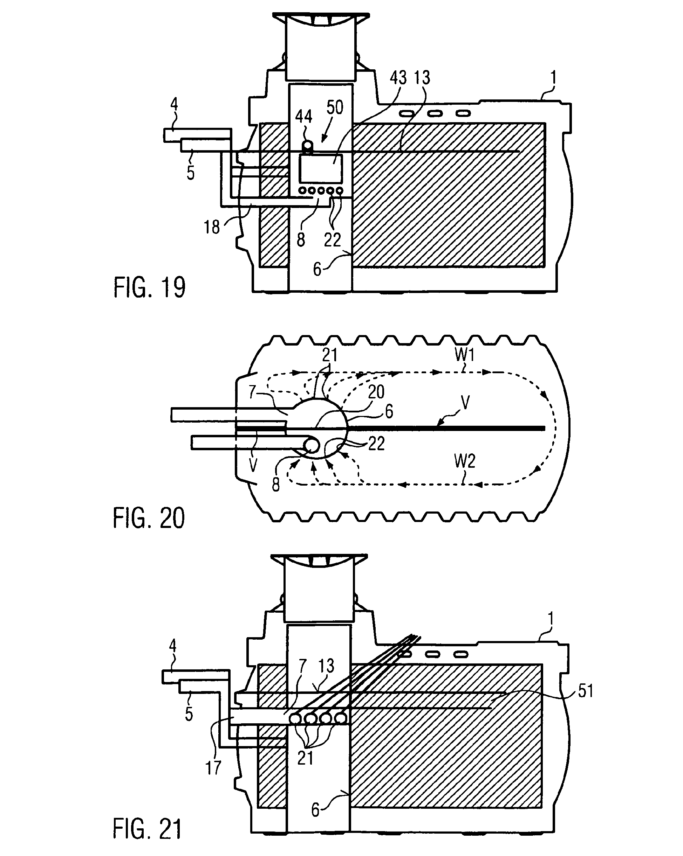

In den Fig. 1, 15, 16 und 18 ist jeweils mit einem schwarzen Punkt ein selbsttätiger Verschluss 50, beispielsweise für die Mündung 8 angedeutet, wie dies in einem Leichtflüssigkeitsabscheider L üblich ist, um den Auslauf 5 zu blockieren, sobald sich eine bestimmte Schichtdicke der abgeschiedenen Leichtflüssigkeit eingestellt hat, die auf der Flüssigkeit schwimmt, und zwar sowohl im Inneren des Behälters als auch im Bauwerk 6, wie dies anhand der Fig. 19 bis 21 erläutert wird.

Im Schwerkraft-Abscheider A in Fig. 19 ist die Mündung 8 über die Verrohrung 18 z. B. so im Bauwerk 6 platziert, dass sie innerhalb des Bauwerks 6 nach oben weist. Die Mündung 7 vom Zulauf 4 befindet sich vor oder hinter der Zeichnungsebene. Der selbsttätige Verschluss 50 umfasst beispielsweise einen Schwimmer 43, der im Bauwerk 6 abhängig von der Dicke einer Schicht 51 der Leichtflüssigkeit (Fig. 21) ansteigt oder absinkt, bis er die Mündung 8 blockiert. Ferner sind oberhalb der Mündung 8 im Bauwerk 6 mehrere hier als runde (viereckige oder schlitzförmige) Bohrungen ausgebildete Durchlässe 22 (siehe auch Fig. 18) angedeutet, durch welche die Flüssigkeit aus dem Teilströmungsweg W2 in das Bauwerk 6 und zur Mündung 8 eintritt. Oberhalb der Durchlässe 22 ist wenigstens ein Durchlass 44 vorgesehen, der die Leichtflüssigkeit aus dem Inneren des Behälters 1 in das Bauwerk 6 eindringen lässt, um den Schwimmer 43 betätigen zu können.

Fig. 20 verdeutlicht, wie sich die Teilströmungswege W1, W2 durch die Durchlässe 22 bzw. Durchlässe 21 (Fig. 21) in das und aus dem Bauwerk 6 aufzweigen, wobei beispielsweise die Trennwand 20 hier in Ausrichtung mit den beiden Vorhängen V die Mündungen 7, 8 voneinander separiert.

In Fig. 21 sind der Mündung 7 im Bauwerk 6 innerhalb der Schicht 51 einer Leichtflüssigkeit im Behälter 1 hier beispielsweise runde (viereckige oder schlitzförmige) Durchlässe 21 zugeordnet, durch welche die zulaufende Flüssigkeit aus dem Bauwerk 6 in den Teilströmungsweg W1 eintritt.

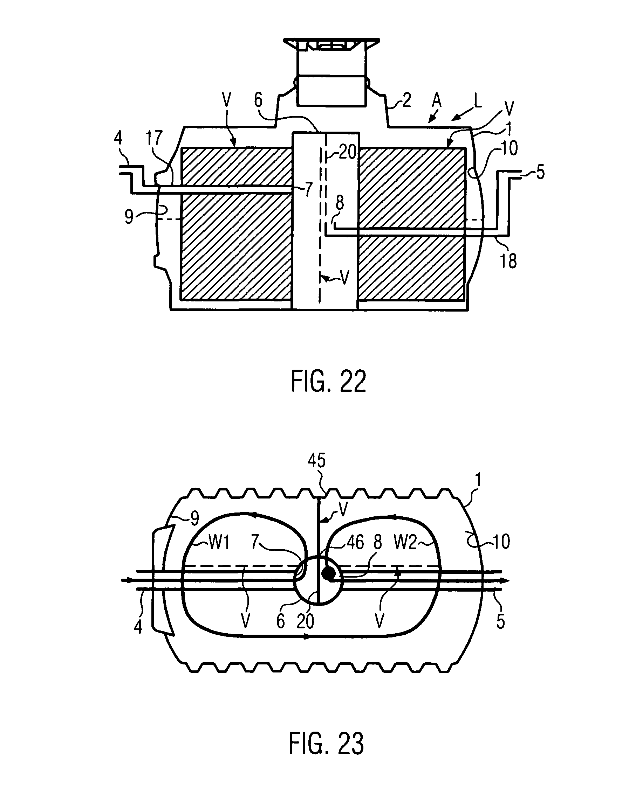

Fig. 22 und 23 verdeutlichen eine weitere Ausführungsform eines Schwerkraft-Abscheiders A, hier beispielsweise eines Leichtflüssigkeitsabscheiders L, dessen länglicher Behälter 1 Zulauf 4 und Auslauf 5 an den sich gegenüberliegenden Behälterseitenwänden 9, 10 aufweist, und das Bauwerk 6 in etwa in der Mitte, wobei zu den Mündungen 7, 8 die Verrohrungen 17, 18 führen. Das Bauwerk 6 wird durch die Trennwand 20 unterteilt, die in etwa mit einem kürzeren Vorhang V ausgerichtet ist, der sich vom Bauwerk 6 zur Behälterlängswand erstreckt, und beispielsweise mit seinen Seitenrändern 45, 46 jeweils zumindest weitgehend abdichtet. Die zwei weiteren, in etwa fluchtenden längeren Vorhänge V erstrecken sich ausgehend vom Bauwerk 6 in Richtung zu den Behälterseitenwänden 9, 10 und enden im Abstand von diesen, so dass sich eine brillenförmige Gesamtströmung aus den Teilströmungswegen W1, W2 ergibt, deren Länge erheblich größer ist als die lichte Weite F' des Behälters 1 in Richtung seiner Längsachse. Auch in diesem Fall ist am Behälter 1 nur ein hier in etwa mittiger Dom 2 vorgesehen, und zwar oberhalb des Bauwerks 6. Bei dieser Bauweise gemäß Fig. 22 und 23 könnte das Bauwerk 6 natürlich auch außermittig platziert werden, d.h. näher zur einen oder zur anderen Behälterseitenwand 9, 10, als gezeigt. Der Behälter 1 könnte bei jeder Ausführungsform in Draufsicht auch rund oder mit einem beliebigen geometrischen Querschnitt ausgebildet sein. Obwohl in den Ausführungsformen gerade Verlaufsrichtungen der Vorhänge V gezeigt sind, könnte der jeweilige Vorhang V alternativ einen kurvigen, gekrümmten oder verschlungenen Verlauf folgen.

Im Kern wird gemäß der Erfindung wenigstens ein Vorhang im Inneren des Behälters 1 des Schwerkraftabscheiders A abgehängt, um eine bestimmte Strömungsführung und vor allem Verlängerung des Gesamtströmungsweges vom Zulauf zum Auslauf zu erzeugen, durch welche die Abscheideleistung erheblich gesteigert werden kann, so dass für eine geforderte Abscheideleistung ein kleinerer Behälter verwendet werden kann. Der Vorhang kann zumindest bereichsweise eine koaliszierende Oberfläche K aufweisen, um im Falle eines Leichtflüssigkeitsabscheiders L gegebenenfalls den Einsatz eines Koaleszenzfiltereinsatzes oder einer Koaleszenzmaterialcharge einzusparen. Der Vorhang V wird zweckmäßig mit einem beiden Mündungen 7, 8 vom Zu- und Auslauf 4, 5 gemeinsamen Bauwerk funktionell kombiniert, um einerseits mit nur einem Dom 2 auszukommen, und um andererseits den Gesamtströmungsweg so lange wie möglich auszubilden. Das Bauwerk 6 bietet ferner den Vorteil einer zentralen Wartung und Zugänglichkeit. Dieses Bauprinzip ist nicht nur für Leichtflüssigkeitsabscheider zweckmäßig, sondern kann gegebenenfalls auch für Fettabschneider, Stärkeabscheider, Schlammfänge, und dgl. eingesetzt werden. Der Vorhang kann geraden Verlauf haben oder Kurvenformen bzw. in sich verschlungen sein.

## Patentansprüche

1. Schwerkraft-Abscheider (A), insbesondere Leichtflüssigkeitsabscheider (L), mit einem einen Zulauf (4) und einen Auslauf (5) aufweisenden Behälter (1) mit einer vorbestimmten inneren lichten Weite (F'), **dadurch gekennzeichnet, dass** im Inneren des Behälters (1) wenigstens ein zumindest eine Platte (23, 32') und/oder eine Gewebebahn (32) aufweisender, im Wesentlichen vertikal herabhängender Vorhang (V) installiert und mit einem Seitenrand (37) von einer Behälterseitenwand (10, 11) beabstandet ist und dort einen Strömungsumlenkbereich (29) begrenzt und den Gesamtströmungsweg zwischen im Behälter (1) platzierten Mündungen (7, 8) vom Zu- und Auslauf (4, 5) über die lichte Weite (F') hinaus verlängert.

2. Schwerkraft-Abscheider nach Anspruch 1, **dadurch gekennzeichnet, dass** der und/oder ein weiterer, den Gesamtströmungsweg verlängernder Vorhang (V) mit wenigstens einem Seitenrand (45) direkt an einer Behälterseitenwand (9) angeordnet ist.

3. Schwerkraft-Abscheider nach Anspruch 1, **dadurch gekennzeichnet, dass** unabhängig von am Behälter (1) einander gegenüberliegenden oder benachbarten Platzierungen von Zu- und Auslauf (4, 5) im Behälter (1) liegende Mündungen (7, 8) vom Zu- und Auslauf (4, 5) wesentlich enger benachbart sind als die lichte Weite (F').

4. Schwerkraft-Abscheider nach Anspruch 1, **dadurch gekennzeichnet, dass** die Mündungen (7, 8) in einem im Inneren des Behälters (1) angeordneten, gemeinsamen, hohlen Bauwerk (6), vorzugsweise einem topf- oder schachtförmigen Bauwerk (6), platziert und im Bauwerk (6) durch wenigstens eine Trennwand (20) voneinander separiert sind, und dass das Bauwerk (6) jeder Mündung (7, 8) zugeordnet wenigstens einen seitlichen Durchgang (21, 22) aufweist, der den Anfang bzw. das Ende des verlängerten Gesamtströmungsweges definiert.

5. Schwerkraft-Abscheider nach Anspruch 1, **dadurch gekennzeichnet, dass** entlang des Vorhang (V) Teilströmungswege (W1, W2, W3) definiert sind, und dass die Verlaufsrichtung des Vorhangs (V) im Wesentlichen parallel zur Strömungsrichtung (15, 16) im jeweiligen Teilströmungsweg (W1, W2, W3) ist, vorzugsweise im Wesentlichen gerade oder kurvig oder verschlungen.

6. Schwerkraft-Abscheider nach Anspruch 1, **dadurch gekennzeichnet, dass** die Mündungen (7, 8) im Inneren des Behälters (1) freiliegend platziert sind, und dass der zumindest eine Vorhang (V) zwischen den Mündungen (7, 8) angeordnet ist und sich zumindest im Wesentlichen bis zur jeweiligen, einer Mündung (7, 8) benachbarten Behälterseitenwand (9, 10) erstreckt.

7. Schwerkraft-Abscheider nach Anspruch 4, **dadurch gekennzeichnet, dass** sich der jeweilige Vorhang (V) an das Bauwerk (6) anschließt.

8. Schwerkraft-Abscheider nach Anspruch 1, **dadurch gekennzeichnet, dass** der Vorhang (V) zumindest bereichsweise eine koaliszierende Oberfläche (K) aufweist.

9. Schwerkraft-Abscheider nach wenigstens einem der vorhergehenden Ansprüche, **dadurch gekennzeichnet, dass** im Vorhang (V) einzelne, in Verlaufsrichtung des Vorhangs (V) aufeinanderfolgende Platten (23) im Wesentlichen zueinander parallel ohne oder mit gegenseitiger Überlappung (x) in der jeweiligen Strömungsrichtung (15, 16) in einem Teilströmungsweg (W1, W2) zum Teilströmungsweg (W1, W2) schräg angestellt sind, vorzugsweise mit einem Winkel (α) von etwa 45°.

10. Schwerkraft-Abscheider nach Anspruch 9, **dadurch gekennzeichnet, dass** die Platten (23) um im Wesentlichen vertikale Achsen (28) drehbar an einer Abhängung (27) abgehängt sind.

11. Schwerkraft-Abscheider nach Anspruch 1, **dadurch gekennzeichnet, dass** die Gewebebahn (32) als koaliszierende Oberfläche (K) durchlässige Maschen (35) aufweist.

12. Schwerkraft-Abscheider nach Anspruch 1, **dadurch gekennzeichnet, dass** die Gewebebahn oder Platte (32, 32') undurchlässig ist und als koaliszierende Oberfläche (K) eine Reliefstruktur (36) aufweist.

13. Schwerkraft-Abscheider nach Anspruch 1, **dadurch gekennzeichnet, dass** der Seitenrand (37) des Vorhangs (V) im Strömungsumlenkbereich (29) mit einer Verdickung (38) versehen ist, vorzugsweise mit einer Verdickung (38) mit etwa rundem oder tropfenförmigem und/oder variablem Querschnitt.

14. Schwerkraft-Abscheider nach Anspruch 1, **dadurch gekennzeichnet, dass** der Vorhang (V) zumindest bereichsweise einen gewellten oder zick-zack-förmigen Verlauf mit einem Wellen- oder Zick-Zack-Profil (28, 28') aufweist.

15. Schwerkraft-Abscheider nach wenigstens einem der vorhergehenden Ansprüche, **dadurch gekennzeichnet, dass** im jeweiligen Vorhang (V) Platten (23, 32') und Gewebebahnen (32) kombiniert sind.

16. Schwerkraft-Abscheider nach wenigstens einem der vorhergehenden Ansprüche, **dadurch gekennzeichnet, dass** der jeweilige Vorhang (V) oberhalb des Freispiegels (13) im Behälter (1) an einem längsgeschlitzten Rohr (34) oder an mindestens einem Schienensystem (29) mit einer oder zwei parallelen Führungen als Abhängung (27) verankert ist.

17. Schwerkraft-Abscheider nach wenigstens einem der vorhergehenden Ansprüche, **dadurch gekennzeichnet, dass** ein sich in etwa in Richtung der lichten Weite (F') im Inneren des Behälters (1) erstreckender Vorhang (V) das Innere des Behälters (1) in etwa halbiert, oder dass mindestens zwei im Wesentlichen zueinander parallele Vorhänge (V) vorgesehen sind, die einen mäanderförmigen Gesamtströmungsweg definieren.

18. Schwerkraft-Abscheider nach wenigstens einem der vorhergehenden Ansprüche, **dadurch gekennzeichnet, dass** zwei oder mehrere Vorhänge (V) jeweils mit annähernd geradem Verlauf zueinander abgewinkelt oder in einer sternförmigen Konfiguration angeordnet sind, vorzugsweise sternförmig um das den Mündungen (7, 8) gemeinsame Bauwerk (6).
